(19) Europäisches Patentamt
European Patent Office
Office européen des brevets

(11) EP 3 521 023 A1

(12) EUROPEAN PATENT APPLICATION
published in accordance with Art. 153(4) EPC

(43) Date of publication:
**07.08.2019 Bulletin 2019/32**

(21) Application number: **17855499.4**

(22) Date of filing: **23.08.2017**

(51) Int Cl.:
***B32B 27/36*** (2006.01) ***B29B 11/06*** (2006.01)
***B29C 49/22*** (2006.01) ***B32B 27/00*** (2006.01)
***B65D 65/40*** (2006.01)

(86) International application number:
**PCT/JP2017/030116**

(87) International publication number:
**WO 2018/061541 (05.04.2018 Gazette 2018/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.09.2016 JP 2016190038**

(71) Applicant: **Toyo Seikan Group Holdings, Ltd.**
**Shinagawa-ku**
**Tokyo 141-8627 (JP)**

(72) Inventors:
- **SAWA, Yoshiki**
  **Yokohama-shi**
  **Kanagawa 240-0062 (JP)**
- **YAMADA, Toshiki**
  **Yokohama-shi**
  **Kanagawa 240-0062 (JP)**
- **HIRAYAMA, Yukiko**
  **Yokohama-shi**
  **Kanagawa 240-0062 (JP)**
- **MURAMATSU, Kanna**
  **Yokohama-shi**
  **Kanagawa 240-0062 (JP)**

(74) Representative: **J A Kemp**
**14 South Square**
**Gray's Inn**
**London WC1R 5JJ (GB)**

# (54) MULTILAYER-STRUCTURED MOLDED ARTICLE

(57) A formed body having a multilayered structure comprising inner and outer layers of a first ethylene terephthalate type polyester resin, and an oxygen-absorbing intermediate layer containing a non-polymer type organic oxygen absorber; wherein, the oxygen-absorbing intermediate layer, further, contains a second ethylene terephthalate type polyester resin that has relatively more copolymerizable units than the first ethylene terephthalate type polyester resin, the non-polymer type organic oxygen absorber being contained therein in an amount of not less than 5 parts by mass per 100 parts by mass of the second ethylene terephthalate type polyester resin.

EP 3 521 023 A1

## Description

Technical Field:

This invention relates to an oxygen-absorbing resin composition containing an organic oxygen absorber. More specifically, the invention relates to a formed body having a multilayered structure including, as an intermediate layer, an oxygen-absorbing layer that is formed by using an oxygen-absorbing resin composition containing an ethylene terephthalate type polyester resin and an organic oxygen absorber.

Background Art:

Owing to their excellent properties such as formability, transparency, mechanical strength, resistance against chemicals as well as their relatively high barrier property against gases such as oxygen and the like gases, the ethylene terephthalate type polyester resins have been used in a variety of fields as packaging materials like films, sheets, and bottles. To further improve the gas-barrier property of these packaging materials, there have also been proposed multilayered structures including a layer of a gas-barrier resin having excellent gas-barrier property, such as a saponified product of an ethylene-vinyl acetate copolymer or a polyamide as an intermediate layer between the inner layer and the outer layer of a polyester resin via suitable adhesive resin layers.

Here, concerning the packaging containers such as polyester bottles and the like placed in the market, it has been urged to further reduce the thickness of the body portions from the standpoint of saving the resources and reducing the weight. To meet such requirements, however, it becomes necessary, as a matter of course, to prevent a decrease in the barrier property against oxygen and the like gases as a result of a reduction in the thickness. In this case, in the embodiment of using the gas-barrier resin as described above, it becomes necessary to separately provide a gas-barrier resin layer in order to shut off the permeation of gases making it, therefore, difficult to reduce the thickness of the container to a sufficient degree. Therefore, it has been desired to further improve the gas-barrier property without using the gas-barrier resin layer .

As a means for improving the barrier property against oxygen and the like without using the gas-barrier resin, there has been known a method of using an inorganic oxygen absorber such as iron powder or the like. The oxygen absorber of this kind undergoes oxidation by itself to absorb oxygen; i.e., exhibits barrier property to shut off the permeation of oxygen as a result of absorbing oxygen. The oxygen of this kind, however, causes the resin to be colored and, therefore, cannot be used in the field of packaging where transparency is required. In the field of packaging, therefore, it is a generally accepted practice to use organic oxygen absorbers that do not cause the resins to be colored.

The organic oxygen absorbers are the compounds having an aliphatic unsaturated bond, and absorb oxygen as their unsaturated bond between the carbons undergoes the reaction with oxygen. For example, a patent document 1 proposes an oxygen-absorbing resin composition containing an oxidizing organic component (organic oxygen absorber) such as an unmodified polybutadiene or a polybutadiene modified with a maleic anhydride.

Further, a patent document 2 is proposing an oxygen-trapping composition containing, as an organic oxygen absorber, a compound that has an unsaturated alicyclic structure (cyclohexene structure).

Moreover, patent documents 3 to 5 filed by the present applicant are proposing oxygen-absorbing resin compositions that contain, as organic oxygen absorbers, an acid anhydride represented by the following formula;

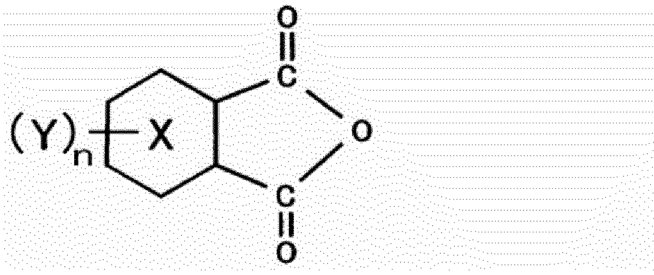

(1)

wherein a ring X is an aliphatic ring having an unsaturated bond, n is a number of 0 or 1, and
Y is an alkyl group,

a derivative such as ester, amide, imide or dicarboxylic acid derived from the above acid anhydride; or a polymer that contains a constituent unit derived from the above acid anhydride.

Moreover, a patent document 6 proposes an oxygen-absorbing resin composition containing, as an organic oxygen absorber, a bisimide that is obtained by reacting the acid anhydride represented by the above-mentioned formula

with an aromatic diamine.

Here, among the above-mentioned organic oxygen absorbers, those of the non-polymer type, in particular, have small molecules which are highly mobile, and, therefore, exhibit high degrees of oxygen-absorbing capability. However, when a multilayered structure is fabricated by forming, as the intermediate layer, an oxygen-absorbing layer in which the non-polymer type organic oxygen absorber is dispersed in an ethylene terephthalate type polyester resin (base material resin) and by forming the inner and outer layers using an ethylene terephthalate type polyester, there arouses a problem in that the thickness of the intermediate layer becomes uneven. The problem of unevenness in the thickness of the intermediate layer becomes conspicuous particularly when there is used an organic oxygen absorber of a low molecular weight.

So far, however, no study has been conducted concerning the problems that occur when an intermediate layer is to be formed by using an oxygen-absorbing resin composition that contains the non-polymer type organic oxygen absorber.

For instance, a patent document 7 discloses a method of forming a PET resin that reduces the probability of defective forming caused by the particles that are added, by using a resin composition of a PET resin to which the particles have been dispersed, and by adding thereto a PET copolymer that has a rate of crystallization smaller than that of the PET resin. That is, this method is based on a technology in that the particles added to the PET resin work as a nucleating agent and promote the crystallization of the PET resin during the forming such as blow molding. Therefore, the amorphous PET copolymer is added thereto to prevent the occurrence of defective forming caused the crystallization of the PET resin.

Here, however, the non-polymer type organic oxygen absorber contained in the above-mentioned oxygen-absorbing resin composition assumes the form of a liquid at room temperature, and does not work as a nucleating agent. It is not, therefore, considered that the problem of unevenness in the thickness can be solved by delaying the crystallization.

Further, a patent document 8 is a technology proposed by the present applicant and is concerned to a multilayered packaging material comprising an inner layer and an outer layer of a polyester resin, and an oxygen-absorbing intermediate layer. Here, the patent document 8 uses two or more kinds of resins as the resin composition for forming the intermediate layer in order to prevent the mismatching between the melt viscosity thereof and the melt viscosity of the polyester resin that forms the inner and outer layers to thereby prevent the occurrence of defective forming caused by the mismatching in the melt viscosity. This technology has quite a significant meaning in securing the matching in the melt viscosity at the time of co-forming and preventing the defective forming. However, this technology is to prevent the mismatching in the ratio of the melt viscosities between the polyester such as PET and the gas-barrier resin or the oxygen-trapping polymer which is quite different from the polyester. Namely, this technology is not to prevent the unevenness in the thickness of the intermediate layer that occurs when the polyester such as PET is used for forming the inner and outer layers and the intermediate layer.

As described above, so far as the present applicant knows, quite no study has heretofore been conducted concerning the problem of unevenness in the thickness of the intermediate layer that could occur when a polyester of the same kind is used for forming the inner and outer layers and for forming the intermediate layer without, however, adding any additive that serves as a nucleating agent to the intermediate layer.

Prior Art Documents:

Patent Documents:

Patent document 1: JP-A-2004-161796

Patent document 2: JP-T-2010-523799

Patent document 3: WO2012/102086

Patent document 4: WO2013/099921

Patent document 5: JP-A-2015-174895

Patent document 6: JP-A-2013-531084

Patent document 7: JP-A-8-283422

Patent document 8: JP-A-2004-2566

Outline of the Invention:

Problems that the Invention is to Solve:

It is, therefore, an object of the present invention to provide a formed body having a multilayered structure in which an ethylene terephthalate type polyester resin is used as the base material resin for forming inner and outer layers and for forming an intermediate layer, the intermediate layer being blended with a non-polymer type organic oxygen absorber, in order to effectively suppress the unevenness in the thickness of the intermediate layer.

Means for Solving the Problems:

The present inventors have conducted experiments extensively concerning the formed bodies having multilayered structures that include layers of an ethylene terephthalate type polyester resin blended with a non-polymer type organic oxygen absorber, and layers of an ethylene terephthalate type polyester resin that is not blended with the organic oxygen absorber. As a result, the inventors have discovered the fact that the polyester resin is plasticized and exhibits a decreased melt viscosity if it is blended with the non-polymer type organic oxygen absorber, causing a mismatch in the viscosity at the time of injection molding and, therefore, developing unevenness in the thickness of the layer of the polyester resin that is blended with the organic oxygen absorber. Based on the above discovery, therefore, the inventors have completed the present invention.

According to the present invention, therefore, there is provided a formed body having a multilayered structure comprising inner and outer layers of a first ethylene terephthalate type polyester resin, and an oxygen-absorbing intermediate layer containing a non-polymer type organic oxygen absorber;
wherein, the oxygen-absorbing intermediate layer, further, contains a second ethylene terephthalate type polyester resin that has relatively more copolymerizable units than the first ethylene terephthalate type polyester resin, the non-polymer type organic oxygen absorber being contained therein in an amount of not less than 5 parts by mass per 100 parts by mass of the second ethylene terephthalate type polyester resin.

In the formed body having a multilayered structure of the present invention, it is desired that:

(1) The second ethylene terephthalate type polyester resin contains a copolymerizable component in an amount of 5 to 40 mol%;
(2) The first ethylene terephthalate type polyester resin contains the copolymerizable component in an amount suppressed to be not more than 5 mol%;
(3) The non-polymer type organic oxygen absorber assumes the form of a liquid at not lower than 50°C;
(4) The non-polymer type organic oxygen absorber is an imide compound having an unsaturated alicyclic ring in the molecules thereof; and
(5) The non-polymer type organic oxygen absorber is an imide compound derived from an acid anhydride represented by the following formula (1):

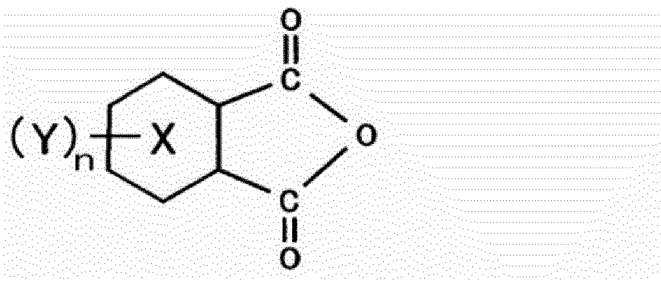

(1)

wherein, the ring X is an alicyclic ring having an unsaturated bond, n is a number of substituents Y bonded to the ring X and is an integer of 0 or 1,
and Y is an alkyl group.

Further, the formed body having a multilayered structure of the present invention is used, preferably, as a packaging material and is formed into, for example, a preform for forming containers. The preform is, thereafter, subjected to the secondary forming such as blow molding or the like forming and is, finally, used in the form of containers.

Effects of the Invention:

The formed body having a multilayered structure of the present invention has a basic structure in which the inner and outer layers are formed of an ethylene terephthalate type polyester resin, and an oxygen-absorbing layer containing a non-polymer type organic oxygen absorber is provided as an intermediate layer. Here, a particularly important feature resides in that the base material resin for forming the oxygen-absorbing layer (oxygen-absorbing intermediate layer) is a polyester resin (second ethylene terephthalate type polyester resin) having a crystallinity lower than that of the polyester resin (first ethylene terephthalate type polyester resin) that forms the inner and outer layers.

That is, the first ethylene terephthalate type polyester resin forming the inner and outer layers is a polyethylene terephthalate containing a little (or no) copolymerizable component whereas the second ethylene terephthalate type polyester resin used as the base material resin for forming the oxygen-absorbing intermediate layer is a polyethylene terephthalate (e.g., PET modified with a cyclohexanedimethanol, often called PET-G) that contains the copolymerizable component a lot.

The formed body having a multilayered structure of the present invention uses the second ethylene terephthalate type polyester resin having a crystallinity lower than that of the inner and outer layers as the base material resin for forming the oxygen-absorbing intermediate layer. Therefore, the multilayered structure makes it possible to effectively eliminate unevenness in the thickness of the oxygen-absorbing intermediate layer that is blended with the non-polymer type organic oxygen absorber. As a result, the problems are effectively solved, such as defective forming and defective appearance caused by the unevenness in the thickness.

In the present invention, use of the second ethylene terephthalate type polyester resin of a low crystallinity mentioned above helps effectively eliminate the unevenness in the thickness of the oxygen-absorbing intermediate layer caused by the use of the non-polymer type organic oxygen absorber on account of the principle mentioned below.

That is, the non-polymer type organic oxygen absorber has a high degree of affinity to the ethylene terephthalate type polyester resin and has a small molecular weight. When added to the polyester resin, therefore, the non-polymer type organic oxygen absorber produces a plasticizing effect and lowers the melt viscosity of the polyester resin. For example, Fig. 1 shows curves of melt viscosities of when the non-polymer type organic oxygen absorber is added in an amount of 10 parts by mass to 100 parts by mass of the ordinary polyethylene terephthalate (first ethylene terephthalate type polyester resin) in comparison with that of the first ethylene terephthalate type polyester resin to which no non-polymer type organic oxygen absorber has been added (as for the detailed measuring conditions, refer to the Examples).

As will be understood from the viscosity curves of Fig. 1, addition of the non-polymer type organic oxygen absorber brings about a great decrease in the melt viscosity of the polyester resin. As a result, at the time of forming by the co-injection or the like injection, there occurs a mismatch in the viscosity between the inner/outer layers and the oxygen-absorbing intermediate layer causing unevenness in the thickness of the oxygen-absorbing intermediate layer and dispersion at the end of the intermediate layer in the circumferential direction. Unevenness in the thickness and dispersion at the end of the intermediate layer in the circumferential direction could cause such defects in the forming as uneven thickness and misalignment due to uneven stretching at the time of forming such as stretch-blow molding.

According to the present invention, however, the second ethylene terephthalate type polyester resin used as the base material resin for forming the oxygen-absorbing intermediate layer, has a melting point lower than that of the first ethylene terephthalate type polyester resin used for forming the inner and outer layers and, therefore, helps lower the forming temperature. This effectively relaxes a drop in the melt viscosity of the second ethylene terephthalate type polyester resin caused by the addition of the non-polymer type organic oxygen absorber, effectively prevents the mismatching in the melt viscosity at the time of injection molding, and makes it possible to effectively prevent the occurrence of unevenness in the thickness of the oxygen-absorbing intermediate layer.

For example, it will be understood that when the second ethylene terephthalate type polyester resin is used as the base material resin for forming the oxygen-absorbing intermediate layer, a container of a multilayered structure can be formed according to the present invention nearly as easily as a container of a single layer of the first ethylene terephthalate type polyester resin, effectively preventing the occurrence of unevenness in the thickness.

If it is to simply prevent the mismatching in the viscosity at the time of forming a preform, then the temperature for forming the intermediate layer may simply be lowered. In this case, however, crystallization of the oxygen-absorbing intermediate layer is accelerated during the blow molding, giving rise to the occurrence of whitening which could greatly impair the transparence and, depending on the cases, causing defects in the forming. Therefore, lowering the temperature for forming the intermediate layer is not suited for the present invention.

As described above, the present invention effectively eliminates the unevenness in the thickness of the oxygen-absorbing intermediate layer caused by the addition of the non-polymer type organic oxygen absorber, and prevents defective appearance or defective forming caused by the uneven thickness. Besides, the above effect permits the non-polymer type organic oxygen absorber to be added in increased amounts. It is, therefore, made possible to express an excellent oxygen-absorbing capability of the oxygen absorber to a sufficient degree and hence to express an excellent oxygen-barrier property even with, for example, containers having small thicknesses.

Brief Description of the Drawing:

[Fig. 1] It is a diagram showing melt viscosities of various kinds of ethylene terephthalate type polyester resins used as base material resins for forming inner/outer layers and oxygen-absorbing intermediate layers, and melt viscosities of when these polyester resins are blended with a non-polymer type organic oxygen absorber.

Modes for Carrying Out the Invention:

The formed body having a multilayered structure of the present invention comprises inner and outer layers of a first ethylene terephthalate type polyester resin, and an oxygen-absorbing intermediate layer containing a non-polymer type organic oxygen absorber. Here, as the intermediate layer between the inner layer and the outer layer, there can be suitably provided, as required, intermediate layers other than the oxygen-absorbing intermediate layer.

<Inner and outer layers>

In the invention, both the inner layer and the outer layer are formed by using the first ethylene terephthalate type polyester resin. This enables the obtained formed body to maintain its excellent transparency and heat resistance.

That is, the first ethylene terephthalate type polyester resin is a polyethylene terephthalate (PET) formed from a terephthalic acid and an ethylene glycol, and, usually, has a glass transition point (Tg) in a range of 50 to 90°C and, specifically, 55 to 80°C and a melting point (Tm) in a range of 200 to 275°C and, specifically, 220 to 270°C.

Further, the first ethylene terephthalate type polyester resin is more highly crystalline than the second ethylene terephthalate type polyester resin that will be described later, and may contain, for example, a copolymerizable component in an amount which, however, is suppressed to be, desirably, not more than 5 mol%. That is, if the polyethylene terephthalate containing much copolymerizable units is used as the base material resin for forming the inner and outer layers, then it might impair the properties of the formed body, such as heat resistance and strength.

Here, if the amount of the copolymerizable acid component is X mol% where the amount of the total dicarboxylic acid components is 100 mol% and if the amount of the copolymerizable alcohol component is Y mol% where the amount of the total glycol components is 100 mol% (X or Y could be zero), then the amount of the copolymerizable components in the first polyethylene terephthalate type polyester resin is given by X + Y.

As the copolymerizable units that may be contained in limited amounts as described above, there can be exemplified, as dibasic acids other than the terephthalic acids, aromatic dicarboxylic acids such as isophthalic acid, phthalic acid and naphthalenedicarboxylic acid; alicyclic dicarboxylic acids such as cyclohexanedicarboxylic acid, etc.; and aliphatic dicarboxylic acids such as succinic acid, adipic acid, sebacic acid and dodecanedioic acid, which may be used in one kind or in a combination of two or more kinds. As the diols other than the ethylene glycols, there can be exemplified propylene glycol, 1,4-butanediol, diethylene glycol, 1,6-hexylene glycol, cyclohexanedimethanol and ethylene oxide adduct of bisphenol A, which may be used in one kind or in a combination of two or more kinds.

The above-mentioned polyesters should have molecular weights at least large enough to form films and should desirably have intrinsic viscosities (I.V.) which are, usually, in a range of 0.6 to 1.4 dL/g and, specifically, 0.63 to 1.3 dL/g.

<Oxygen-absorbing intermediate layer>

In the formed body having a multilayered structure of the present invention, the oxygen-absorbing intermediate layer is a layer containing the non-polymer type organic oxygen absorber in order to impart oxygen-barrier property to the formed body. This layer uses the second ethylene terephthalate type polyester resin as the base material resin.

The second ethylene terephthalate type polyester resin (hereinafter often called second PET) is a lowly crystalline polyethylene terephthalate as described earlier, and contains the copolymerizable units more than the first ethylene terephthalate type polyester resin (often abbreviated as first PET) that is used for forming the inner and outer layers. That is, upon being blended with the copolymerizable units, the second PET has a melting point lower than that of the first PET that is the base material resin for forming the inner and outer layers, and exhibits an increased melt viscosity during the forming. The second PET works to suppress the mismatching in the viscosity during the forming, that stems from a decrease in the melt viscosity caused by the use of the non-polymer type organic oxygen absorber that will be described later.

Therefore, there is no particular limitation on the amount of the copolymerizable units added to the second PET if the second PET has a melting point lower than that of the first PET and exhibits a melt viscosity larger than that of the first PET during the forming. Usually, however, it is desired that the copolymerizable units are added in an amount in a range of 5 to 40 mol% and, specifically, 10 to 35 mol% provided the amount thereof is larger than the amount of the copolymerizable components in the first PET. That is, if the amount of the copolymerizable units is small, it becomes difficult to effectively avoid the mismatching in the viscosity stemming from a decrease in the melt viscosity caused by

the use of the non-polymer type organic oxygen absorber. If the copolymerizable units are contained in excess amounts, on the other hand, then the basic properties are impaired, such as transparency, strength and formability possessed fundamentally by the ethylene terephthalate type polyester resin. Besides, depending upon the cases, defects in the forming may often be triggered by the mismatch in the melt viscosity.

If the amount of the copolymerizable acid component is X mol% where the amount of the total dicarboxylic acid components is 100 mol% and if the amount of the copolymerizable alcohol component is Y mol% where the amount of the total glycol components is 100 mol% (X or Y could be zero), then the amount of the copolymerizable components in the second PET, too, is given by X + Y like in the case of the above-mentioned first PET.

As the copolymerizable components that can be introduced into the second PET, there can be exemplified the same dibasic acids and diols as those exemplified for the first PET.

The above-mentioned lowly crystalline second PET, usually, has a melting point (Tm) that is lower than that of the first PET and lies in a range of 200 to 250°C. Here, the completely amorphous PET has no melting point.

In the formed body having a multilayered structure of the present invention as described above, the oxygen-absorbing intermediate layer is formed by using the lowly crystalline second PET as the base material resin (matrix resin). Here, the second PET contains the oxygen absorber which is dispersed therein.

In the present invention, it is also important to use a non-polymer type organic oxygen absorber as the oxygen absorber.

That is, there have been known the oxygen absorbers of the inorganic type, such as iron powder and the like. However, the inorganic oxygen absorbers cause the resin to be colored in black and impairs transparency of the resin. As also described earlier, therefore, the inorganic oxygen absorbers cannot be used in the field of packaging where transparency is required.

The organic oxygen absorbers, on the other hand, have an unsaturated bond between the carbon atoms. Namely, oxygen is trapped as the unsaturated bond reacts with oxygen; i.e., oxygen-absorbing capability is produced. As such organic oxygen absorbers, there have been known those of the polymer type, such as polybutadiene and polyisoprene. The present invention, however, uses the organic oxygen absorber of, specifically, the non-polymer type (i.e., the one having no recurring unit in the molecules) . The organic oxygen absorber of the non-polymer type has molecules which are smaller than those of the polymer type and which, therefore, have a high degree of mobility. Therefore, oxygen atoms that have entered into the layer quickly undergo the reaction, and a high degree of oxygen-absorbing capability is exhibited.

The organic oxygen absorber of the non-polymer type, on one hand, has an advantage of a larger oxygen-absorbing capability than that of the polymer type. However, the organic oxygen absorber of the non-polymer type has a high degree of affinity to the ethylene terephthalate type polyester resin and, further, has small molecules causing, therefore, the polyester resin to be plasticized, the melt viscosity thereof to be lowered and, as a result, causes the mismatching in the viscosity between the inner/outer layers and the oxygen-absorbing intermediate layer during the forming. This, as a result, causes unevenness in the thinness of the oxygen-absorbing intermediate layer.

In the present invention, however, the non-polymer type organic oxygen absorber is dispersed in the above-mentioned lowly crystalline second PET. This, therefore, effectively suppresses the mismatching in the viscosity relative to the inner/outer layers caused by the plasticized oxygen absorber and, further, effectively prevents the occurrence of unevenness in the thickness of the oxygen-absorbing intermediate layer.

The non-polymer type organic oxygen absorber used in the present invention has in the molecules thereof an unsaturated bond between the carbon atoms, that reacts with oxygen. Therefore, there can be used compounds having various molecular structures if they have no recurring unit in the molecules thereof. For example, there can be used a compound having an unsaturated alicyclic structure, like methyltetrahydroindene, 5-ethylidene-2-norbornene, 5-methylene-2-norbornene, 5-isopropylidene-2-norbornene, 5-vinylidene-2-norbornene, 6-chloromethyl-5-iospropenyl-2-norbornene or dicyclopentadiene, and an acid anhydride represented by the following general formula (1):

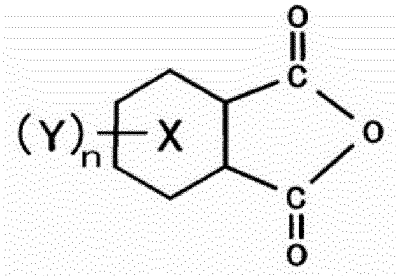

(1)

wherein the ring X is an aliphatic ring having an unsaturated bond, n is a number of the substituents Y bonded to the ring X, and is an integer of 0 or 1, and Y is an alkyl group,

or at least one of those selected from the group consisting of an ester, an amide, an imide or a dicarboxylic acid derived from the acid anhydride.

In the above formula (1), the aliphatic ring X is a 6-membered ring having an unsaturated bond, i.e., a cyclohexene ring, and the unsaturated bond may be at either the third position or the fourth position but is, specifically, at the third position from the standpoint of to-be-oxidized property. There is no specific limitation on the alkyl group. In general, however, from the standpoint of synthesis and to-be-oxidized property, the alkyl group is a lower alkyl group having not more than three carbon atoms and, specifically, a methyl group that is bonded at, usually, either the third position or the fourth position. The acid anhydride of this kind is an anhydrous alkyltetrahydrophthalic acid that is obtained by the Diels-Alder reaction of a maleic anhydride with a diene. The acid anhydride is obtained in the form of a mixture of the isomers thereof. The mixture thereof can, therefore, be used as the non-polymer type organic oxygen absorber.

In the invention, a particularly preferred non-polymer type organic oxygen absorber is the acid anhydride represented by the above general formula (1) and an ester, an amide, an imide or a dicarboxylic acid derived from the acid anhydride. As the acid anhydride which is a source of various derivatives, there is preferably used a 3-methyl-$\Delta^4$-tetrahydrophthalic anhydride represented by the following formula (2) and a 4-methyl-$\Delta^3$-tetrahydrophthalic anhydride represented by the following formula (3),

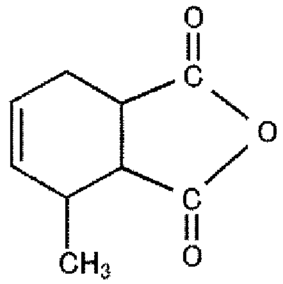

(2)

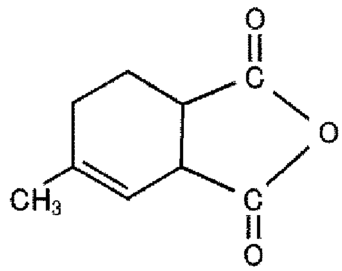

(3)

The acid anhydrides represented by the above general formulas (1) to (3) are capable of forming a variety of derivatives through a method known per se. such that their unsaturated alicyclic structures will not be broken.

For instance, esters are obtained by reacting an acid anhydride such as anhydrous alkyltetrahydrophthalic acid with various alcohols. There is no specific limitation on the alcohol used for the esterification, and there can be used any one of an aliphatic alcohol such as methyl alcohol or ethyl alcohol, or an aromatic alcohol such as phenol. It is, further, allowable to use a polyhydric alcohol such as glycol. In this case, unsaturated alicyclic structures can be introduced in a number corresponding to the number of alcohols in a molecule.

Further, the esters may be partial esters of the acid anhydride.

Namely, such esters can be represented by, for example, the following formulas:

R-O-OC-Z-CO-O-R

HOOC-Z-CO-O-R

or

HOOC-Z-CO-O-R-O-CO-Z-COOH

wherein Z is an unsaturated alicyclic ring possessed by the acid anhydride, and R is an organic group derived from the alcohol used for the reaction.

Further, the amides are obtained by reacting the acid anhydride such as anhydrous alkyltetrahydrophtalic acid

with various amine compounds.

There is no specific limitation on the amine that is used, and there can be used any one of an aliphatic amine such as methylamine, ethylamine or propylamine, or an aromatic amine such as phenylamine. The amine may be the one in which one of the two carbonyl groups forming the acid anhydride group has been amidized or both of them have been amidized. Not being limited to monoamines, further, there can be also used polyvalent amines such as diamine or triamine. In this case, unsaturated alicyclic structures can be introduced in a number corresponding to the number of amines in a molecule.

The imide is obtained by imidizing the amide through the heat treatment. For example, the imide is obtained by heat-treating the amide represented by the following formula;

HOOC-Z-CONH-R

or

HOOC-Z-CONH-R-NHCO-Z-COOH

wherein Z is an unsaturated alicyclic ring possessed by the acid anhydride, and R is an organic group derived from the amine used for the reaction,
and is represented by the following formula;

$Z-(CO)_2-N-R$

or

$Z-(CO)_2-N-R-N-(CO)_2-Z$

wherein Z and R are as defined above.

Further, the dicarboxylic acid is the one that is formed as the acid anhydride is hydrolyzed and the acid anhydride group is cleaved, and is represented by the following formula;

HOOC-Z-COOH

wherein Z and R are as defined above.

In the invention, further, among the acid anhydrides represented by the above general formula or among the compounds derived from the acid anhydrides, more preferred are the compounds having molecular weights of not more than 2000 and, specifically, not more than 1000. This is because the non-polymer type compounds having such low molecular weights have molecules that are highly mobile, are highly reactive with, specifically, oxygen, and exhibit a high degree of oxygen-absorbing capability. Besides, their melting points are, usually, lower than the Tg of the ethylene terephthalate type polyester resins and assume the form of a liquid in a range of not lower than the Tg of the ethylene terephthalate type polyester resins but not higher than the Tm thereof. Therefore, the compound exhibits no crystallizing/nucleating function and is desired even from the standpoint of preventing the defective forming caused by the accelerated crystallization.

Among the above low molecular non-polymer type compounds, particularly high oxygen-absorbing capabilities are exhibited by the imide compounds that are obtained by heat-treating the amides that are the reaction products of the acid anhydrides of the above general formulas (1) to (3) with the amine. Therefore, the imide compounds are more preferably used.

As the amine used for the production of the imide compounds, there can be used either the aliphatic amine or the aromatic amine. Most desirably, however, there is used the imide compound obtained by reacting the aliphatic amine. That is, the imide compound obtained by reacting the aliphatic amine has a glass transition point lower than that of the imide compound obtained from the aromatic amine. When used, for example, as a container, therefore, the imide compound permits the molecules to become highly mobile in an environment in which it is used and, as a result, exhibits a high oxygen-absorbing capability.

Among the above aliphatic amines, from the standpoint of a high degree of dispersion in the ethylene terephthalate type polyester resin used as the base material and preventing the yellowing caused by the absorption of oxygen (oxidation), it is particularly desired to use an imide compound that is obtained by reacting an aliphatic monoamine having not more than 20 carbon atoms or an aliphatic diamine with the above-mentioned acid anhydride followed by the heat treatment.

As the above-mentioned aliphatic monoamine and aliphatic diamine, there can be exemplified alkylamines

such as methylamine, methylenediamine, propylamine, propylenediamine, butylamine, butylenediamine, pentylamine, pentamethylenediamine, hexylamine, hexamethylenediamine, heptylamine, heptamethylenediamine, octylamine, octamethylenediamine, nonylamine, nonamethylenediamine, decylamine, decamethylenediamine, undecylamine, undecamethylenediamine, dodecylamine, dodecamethylenediamine, tridecylamine, tridecamethylenediamine, tetradecylamine, tetradecamethylenediamine, pentadecylamine, pentadecamethylenediamine, hexadecylamine, hexadecamethylenediamine, heptadecylamine, heptadecamethylenediamine, octadecylamine, octadecamethylenediamine, nonadecylamine, nonadecamethylenediamine, and eicosylamine; as well as alkylenediamines such as hexamethylenediamine.

In the invention, the above-mentioned non-polymer type organic oxygen absorber is used in such an amount that ensures a sufficient degree of oxygen-absorbing capability but that does not impair the formability of the second PET that is used as the base resin or does not impair the matching of viscosity at the time of forming. The concrete amount thereof is subject to vary and cannot be strictly specified. Usually, however, the non-polymer type organic oxygen absorber is used in an amount of not less than 5 parts by mass and, more desirably, 10 to 20 parts by mass per 100 parts by mass of the second PET that is used as the base resin. Specifically, the invention effectively suppresses the mismatching in the viscosity relative to the inner/outer layers caused by the plasticization as a result of using the non-polymer type organic oxygen absorber. Therefore, the invention permits the non-polymer type organic oxygen absorber that has excellent oxygen-absorbing capability to be used in large amounts, which is a great advantage of the present invention.

The oxygen-absorbing intermediate layer contains the above-mentioned non-polymer type organic oxygen absorber in which the lowly crystalline second PET is dispersed. Here, the oxygen-absorbing intermediate layer is, usually, blended with a transition metal catalyst to accelerate the oxidation of the oxygen absorber and to improve the oxygen-absorbing capability.

Representative examples of the transition metal in the transition metal catalyst are iron, cobalt, nickel, copper, silver, tin, titanium, zirconium, vanadium, chromium and manganese. Among them, cobalt has the largest catalytic function, particularly, for accelerating the oxidation.

The catalysts of these transition metals are, usually, inorganic salts, organic salts or complexes of these transition metals of low valencies.

As the inorganic acid salt, there can be exemplified halides such as chlorides, oxoacid salts of sulfur such as sulfates, oxoacid salts of nitrogen such as nitrates, oxoacid salts of phosphor such as phosphates and silicates.

As the organic acid salt, on the other hand, there can be exemplified carboxylates, sulfonates and phosphonates. Among them, however, a carboxylate is suited for the object of the present invention. Concrete examples thereof include metal salts such as of acetic acid, propionic acid, isopropionic acid, butanoic acid, isobutanoic acid, pentanoic acid, isopentanoic acid, hexanoic acid, heptanoic acid, isoheptanoic acid, octanoic acid, 2-ethylhexanoic acid, nonanoic acid, 3,5,5-trimethylhexanoic acid, decanoic acid, neodecanoic acid, undecanoic acid, lauric acid, myristic acid, palmitic acid, margalic acid, stearic acid, arachic acid, linderic acid, tsuzuic acid, petroceric acid, oleic acid, linoleic acid, linolenic acid, arachidonic acid, formic acid, oxalic acid, sulfamic acid, and naphthenic acid.

As the complex, further, there can be used a complex thereof with $\beta$-diketone or $\beta$-keto-acid ester. As the $\beta$-diketone or the $\beta$-keto-acid ester, there can be used, for example, acetylacetone, acetoacetic acid ethyl, 1,3-cyclohexadione, methylenebis-1,3-cyclohexadione, 2-benzyl-1,3-cyclohexadione, acetyltetralone, palmitoyltetralone, stearoyltetralone, benzoyltetralone, 2-acetylcyclohexanone, 2-benzoylcyclohexanone, 2-acetyl-1,3-cyclohexadione, benzoyl-p-chlorobenzoylmethane, bis(4-methylbenzoyl)methane, bis(2-hydroxybenzoyl)methane, benzoylacetone, tribenzoylmethane, diacetylbenzoylmethane, stearoylbenzoylmethane, palmitoylbenzoylmethane, lauroylbenzoylmethane, dibenzoylmethane, bis(4-chlorobenzoyl)methane, bis(methylene-3,4-dioxybenzoyl)methane, benzoylacetylphenylmethane, stearoyl(4-methoxybenzoyl)methane, butanoylacetone, distearoylmethane, acetylacetone, stearoylacetone, bis(cyclohexanoyl)methane and dipivaroylmethane.

The transition metal catalyst is used, usually, in an amount, calculated as the metal, of not less than 5 ppm and, specifically, about 10 to about 100 ppm in the oxygen-absorbing layer.

<Other layers>

The formed body having a multilayered structure of the present invention includes the inner and outer layers formed by using the first PET and the oxygen-absorbing intermediate layer formed by using the second lowly crystalline PET as the base resin. Here, the formed body having the multilayered structure may further include, as the intermediate layer, another layer that is known per se. provided it does not impair the object of the present invention which is to effectively suppress the mismatching in the viscosity between the inner/outer layers and the oxygen-absorbing intermediate layer at the time of forming and to prevent the occurrence of unevenness in the thickness of the oxygen-absorbing intermediate layer.

The most representative example of the another layer is a gas-barrier resin layer.

That is, the oxygen-absorbing intermediate layer containing the above-mentioned non-polymer type organic oxygen absorber has a function of enhancing the barrier property against oxygen upon absorbing oxygen based on the oxidation. Here, however, the barrier property against oxygen decreases with the passage of time. Therefore, it is desired to use the gas-barrier resin layer from the standpoint of effectively avoiding the above inconvenience and lengthening the life of the oxygen-barrier property. Moreover, use of the gas-barrier resin layer gives an advantage of improving the barrier property against other gases (e.g., against water vapor, carbonic acid gas and the like gases).

Representative examples of the gas-barrier resin are polyamide resins such as nylon 6, nylon 66, nylon 6/66 copolymer, polymetaxylylenediadipamide (MXD6), nylon 6/10, nylon 11, nylon 12 and nylon 13. Among these polyamides, the polymetaxylylenediadipamide is highly resistant against being oxidized and deteriorated, and is desirable.

As the gas-barrier resin other than the polyamide resins, there can be represented an ethylene-vinyl alcohol copolymer. There can be desirably used, for example, a saponified product of a copolymer that is obtained by saponifying an ethylene-vinyl acetate copolymer having an ethylene content of 20 to 60 mol% and, specifically, 25 to 50 mol% such that the degree of saponification is not less than 96% and, specifically, not less than 99 mol%.

The above gas-barrier resin should have a molecular weight large enough to form a film.

As the layers other than the gas-barrier resin layer, there can be exemplified an adhesive resin layer and a reground resin layer.

The adhesive resin layer is a layer that is suitably provided when there is employed a multilayered structure inclusive of, for example, a gas-barrier resin layer and when the adhesiveness is small among the layers. The adhesive resin layer, therefore, is a thin layer comprising, for example, an olefin type resin modified with an unsaturated carboxylic acid such as maleic anhydride.

The reground resin layer is a layer formed by using a resin composition that comprises a scrap resin such as burrs generated when the formed body having a multilayered structured is being formed and a virgin ethylene terephthalate type polyester resin (first PET) that is used for forming the inner and outer layers. The reground resin layer is formed by reutilizing the resources .

In addition to the above layers, it is also allowable to provide a layer of a thermoplastic resin such as olefin type resin or the like resin, which is other than the ethylene terephthalate type polyester resin. Here, however, attention should be given to that the layer of such a different kind of thermoplastic resin could cause the mismatching in the viscosity relative to the inner/outer layers at the time of forming and could, therefore, induce defects in the forming.

The above-mentioned inner/outer layers, oxygen-absorbing intermediate layer and other intermediate layer provided as required, can be blended with other blending agents, such as filler, coloring agent, heat stabilizer, aging stabilizer, antioxidant, anti-aging agent, photo stabilizer, ultraviolet ray absorber, antistatic agent, lubricant such as metal soap or wax, reforming resin and rubber in small amounts so far as the viscosity matching is not impaired during the injection molding and the defects in the forming are suppressed that are caused by the crystallization during the forming. It is, further, allowable to blend the inner/outer layers and the oxygen-absorbing layer with other resins (e.g., gas-barrier resin) in small amounts.

Moreover, the oxygen-absorbing intermediate layer is not limited to a single layer but may be a plurality of layers.

As the multilayered structure, there can be exemplified the following layer constitutions though not limited thereto only.

The following layer constitutions use the following abbreviations.

First PET: Layer of the first PET formed in addition to the inner and outer layers.
OAR: Oxygen-absorbing intermediate layer comprising the second PET in which the non-polymer type organic oxygen absorber is dispersed.
RG: Reground resin layer.
AD: Adhesive resin layer
GBAR: Gas-barrier layer comprising an aromatic polyamide or an ethylene·vinyl alcohol copolymer.

Inner layer/OAR/outer layer
Inner layer/RG/OAR/outer layer
Inner layer/OAR/RG/outer layer
Inner layer/OAR/first PET/OAR/outer layer
Inner layer/OAR/RG/OAR/outer layer
Inner layer/OAR/GBAR/outer layer
Inner layer/OAR/AD/GBAR/AD/outer layer
Inner layer/RG/OAR/AD/GBAR/AD/outer layer

<Formed bodies having multilayered structures>

The formed bodies having the above-mentioned multilayered structures of the present invention are formed by co-injecting the resins or by co-injecting the resins together with the resin compositions containing predetermined blending agents to form the layers in a known manner. Here, however, unevenness in the thickness of the oxygen-absorbing intermediate layer is very effectively suppressed. After having been formed, therefore, the bodies are very suited for the use where they are to be shaped into packaging containers through the secondary processing.

That is, to form a packaging container, a preform for container is, first, formed in the shape of a test tube or a sheet by the above-mentioned co-injection method. The preform is then subjected to the secondary forming (stretch forming) such as blow-stretch molding, vacuum forming, expansion forming, compressed air forming or plug assist forming to form a container in the shape of a bottle, a cup or a tray. As required, further, the container is imparted with a resistance against the heat through the heat-setting or the like treatment. In this case, if the preform for container which is the primarily formed body is developing unevenness in the thickness of the oxygen-absorbing intermediate layer, then the appearance becomes defective, such as developing wrinkles at the time of reducing the thickness in the subsequent secondary forming.

On the other hand, the formed body having a multilayered structure of the present invention effectively prevents the occurrence of unevenness in the thickness of the oxygen-absorbing intermediate layer. Therefore, the preform for container that is obtained of the invention is capable of effectively preventing the defective forming, i.e., effectively prevents the occurrence of wrinkles caused the unevenness in the thickness when the preform is subjected to the secondary forming where the thickness is reduced.

Further, the second PET that is forming the oxygen-absorbing intermediate layer is lowly crystalline. Besides, the non-polymer type organic oxygen absorber added to the oxygen-absorbing intermediate layer has a low melting point and assumes the form of a liquid at, for example, room temperature and, therefore, does not quite work as a nucleating agent. Therefore, the forming can be conducted without accompanied by the whitening or the defective forming caused by the accelerated crystallization and without impairing excellent properties such as transparency and the like properties inherent in the first PET that is used for forming the inner and outer layers.

By using the formed body having a multilayered structure of the present invention as a container, therefore, it is allowed to decrease the thickness of the container wall by utilizing the oxygen-barrier property due to excellent oxygen-absorbing capability of the oxygen-absorbing intermediate layer. This, therefore, makes it possible to reduce the weight of the container, save the resources and lower the cost. The container can be used for containing beverages such as beer, wine, fruits juices, carbonated soft drinks and the like, as well as fruits, nuts, vegetables, meat products, infantile foods, coffee, jams, mayonnaise, ketchup, edible oils, dressings, sauces, foods boiled in soy sauce, milk products, pharmaceuticals, cosmetics, gasoline and various other contents that may cause deterioration in the presence of oxygen. The container is also excellent in transparency and can be used in a field where transparency is required, too.

## EXAMPLES

The invention will be further described with reference to the Examples described below but to which only the invention is in no way limited.

Described below are the materials and various measuring methods used in the following experiments.

<First ethylene terephthalate type polyester resins (A1)>

(A1-1) :

Copolymerized polyethylene terephthalate resin (IV = 0.83) Copolymerizable components;

Isophthalic acid (copolymerizing ratio = 1.8 mol%)
Diethylene glycol (copolymerizing ratio = 2.3 mol%)

(A1-2) :
Copolymerized polyethylene terephthalate resin (IV = 0.77) Copolymerizable components;

Isophthalic acid (copolymerizing ratio = 0.3 mol%)
Diethylene glycol (copolymerizing ratio = 1.8 mol%)

<Second ethylene terephthalate type polyester resins (A2)>

(A2-1) :
Copolymerized polyethylene terephthalate resin (IV = 0.76) Copolymerizable components;

Isophthalic acid (copolymerizing ratio = 5 mol%)
Diethylene glycol (copolymerizing ratio = 1.7 mol%)

(A2-2) :
Copolymerized polyethylene terephthalate resin (IV = 0.89) Copolymerizable components;

Isophthalic acid (copolymerizing ratio = 10 mol%)
Diethylene glycol (copolymerizing ratio = 1.7 mol%)

(A2-3) :
Copolymerized polyethylene terephthalate resin (IV = 0.75) Copolymerizable components;

Cyclohexanedimethanol (copolymerizing ratio = 30 mol%)
Diethylene glycol (copolymerizing ratio = 2.3 mol%)

<Synthesis of the oxygen-absorbing component (B)>

There was provided the following mixture of anhydrous methyltetrahydrophthalic acid.

Mixture of the anhydrous methyltetrahydrophthalic acid:

HN-2200 produced by Hitachi Kasei Co., containing 45% by weight of a 4-methyl-Δ3-anhydrous tetrahydrophthalic acid and 21% by weight of a cis-3-methyl-Δ4-anhyrous tetrahydrophthalic acid.
Six kg of a hexamethylenediamine (produced by Toray Co.) was dissolved in 57 kg of a 2-propanol in a nitrogen atmosphere, and to which 19 kg of the above mixture of the anhydrous methyltetrahydrophtalic acid was mildly added such that the liquid temperature did not exceed 50°C.
After thrown in whole amounts, the reaction was conducted at 100 to 160°C for about 7 hours while removing the formed water and the solvent, and there was obtained 16.7kg of the oxygen-absorbing component (B).

<Production of the oxygen-absorbing resin pellets>

There was provided a twin screw extruder equipped with a granulating facility (TEM-35B: manufactured by Toshiba Kikai Co.) setting the barrel temperature at 200 to 280°C.
By using the above twin screw extruder, the first ethylene terephthalate type polyester resin (A1) or the second ethylene terephthalate type polyester resin (A2) was mixed and kneaded together with the oxygen-absorbing component (B) in an amount of 10 parts by mass per 100 parts by mass of the ethylene terephthalate type polyester resin (A1 or A2) . The mixture was then extruded in a stranded manner to obtain oxygen-absorbing resin pellets.

<Forming the multilayered preform>

By using a co-injection molding machine, there was formed a multilayered preform having a two-kind-three-layer (PET/intermediate layer/PET) constitution.
That is, the first ethylene terephthalate type resin (A1) that has been dried was thrown into a hopper of the injection-molding machine for forming the inner and outer PET layers, and the pelletized oxygen-absorbing resin was thrown into a hopper of the injection-molding machine for forming the intermediate layer. The resins were then co-injection-molded.
By setting the temperature of the inner and outer PET layers at 290°C and the temperature for forming the intermediate layer at 240 to 280°C, there was formed a multilayered preform weighing 25 g in a manner that the intermediate layer reached neither the mouth/neck portion nor the bottom portion.

<Forming the multilayered blow-molded bottle>

By using an infrared-ray heater, the body portion of the multilayered preform was heated from the outer side thereof at 100°C on its surface. Then by using a stretch rod, the body portion was mechanically stretched in the axial direction of the bottle and, thereafter, the air was blown therein to biaxially stretch the body portion. There was thus formed a stretch-blow-molded bottle of a capacity of 500 ml, the body portion thereof being stretched by roughly 3 times longitudinally, 3 times transversely and 9 times in area. The temperature of the mold was set at 60°C, and the high-pressure air of 3.5 MPa was blown in at room temperature (23°C).

<Measuring the melt viscosity>

By using a capillograph (manufactured by Toyo Seiki Co.), capillary L/D = 10/1 (mm), the melt viscosities were measured at a cylinder temperature of 200°C.

<Evaluating the formability>

The formability was evaluated on the following basis:

○: Dispersion of the end of the intermediate layer of the preform was less than 2 cm in the circumferential direction, and there was obtained a bottle equivalent to a single-layered bottle.
×: Dispersion of the end of the intermediate layer of the preform was not less than 2 cm in the circumferential direction, and the bottle was out of alignment due to uneven heating at the time of blow molding.

<Measuring the haze of the body portion of the preform>

A cylindrical sample 30 mm in height was cut out from the center of the body portion of the multilayered preform, and was then divided into two in the direction of height of the preform to obtain semi-cylindrical samples. By using a spectrophotometer equipped with an integrating sphere (UV-3100PC, manufactured by Shimazu Mfg. Co.), the samples were measured for their hazes according to the following procedures. The scanning conditions consisted of a transmission factor measuring mode over a range of 400 to 700 nm.

<1> Standard white plates were fitted to both the sample side and the reference side, and were scanned along their base lines . Thereafter, the measurements were taken and from which transmission factor integrated value (TO) was calculated over 400 to 700 nm.
<2> The standard white plate was removed from the sample side, and the spectrum scattered by the equipment was measured to calculate the transmission factor integrated value (T1) over 400 to 700 nm.
<3> The sample of preform was fitted to the sample side. Here, the outer surface side of the semicircular preform was closely contacted to the integrating sphere, and was so arranged that the light was incident on the inner surface side of the preform. In this state, the spectrum scattered by the sample was measured to calculate the transmission factor integrated value (Td) over 400 to 700 nm.
<4> In the state of <3>, the standard white plate was fitted to the sample side, and the whole spectrum of the light transmitted through the sample was measured to calculate the transmission factor integrated value (Tt) over 400 to 700 nm.

By using the thus obtained transmission factor integrated values, the haze of the preform was calculated in compliance with the following formula.

$$\text{Haze of the preform (\%)} = \{Td - Tt \times (T1/T0)\}/Tt \times 100$$

The measured value was an average of the values measured from the two semi-cylindrical samples that were obtained from one sample.

<Measuring the haze of the body portion of the bottle>

The body portion of the multilayered bottle was cut out and was measured for its haze by using a color computer (SM-4, manufactured by Suga Shikenki Co.). The values measured at four arbitrary points were averaged.

(Example 1)

The pelletized oxygen-absorbing resin which used the second ethylene terephthalate type polyester resin (A2-1) was thrown into the hopper of the injection machine for forming the intermediate layer. While forming the intermediate layer at a temperature of 260°C, there was formed a multilayered preform and from which a multilayered blow-molded bottle was formed by the methods described above.
Table 1 shows the composition of the formed bottle, temperature for forming the intermediate layer, formability, haze of the body portion of the preform and haze of the body portion of the bottle.

(Example 2)

A multilayered blow-molded bottle was formed and measured in the same manner as in Example 1 but throwing the pelletized oxygen-absorbing resin which used the second ethylene terephthalate type polyester resin (A2-2) into the hopper of the injection machine for forming the intermediate layer and forming the intermediate layer at a temperature of 240°C.
Table 1 shows the composition of the formed bottle, temperature for forming the intermediate layer, formability, haze of the body portion of the preform and haze of the body portion of the bottle.

(Example 3)

A multilayered blow-molded bottle was formed and measured in the same manner as in Example 1 but throwing the pelletized oxygen-absorbing resin which used the second ethylene terephthalate type polyester resin (A2-3) into the hopper of the injection machine for forming the intermediate layer and forming the intermediate layer at a temperature of 240°C.
Table 1 shows the composition of the formed bottle, temperature for forming the intermediate layer, formability, haze of the body portion of the preform and haze of the body portion of the bottle.

(Comparative Example 1)

A single-layered PET preform weighing 25 g was formed by using a co-injection molding machine, halting the injection-molding machine for forming the intermediate layer, throwing the first ethylene terephthalate type polyester resin (A1-1) into the hopper of the injection-molding machine for forming the inner and outer PET layers, and setting the temperature at 290°C. The preform was biaxially stretch-blow molded into the single-layered PET bottle by the above-mentioned method.
Table 1 shows the composition of the formed bottle, temperature for forming the intermediate layer, formability, haze of the body portion of the preform and haze of the body portion of the bottle.

(Comparative Example 2)

A multilayered blow-molded bottle was formed and measured in the same manner as in Example 1 but throwing the pelletized oxygen-absorbing resin which used the first ethylene terephthalate type polyester resin (A1-1) into the hopper of the injection machine for forming the intermediate layer and forming the intermediate layer at a temperature of 280°C.
Table 1 shows the composition of the formed bottle, temperature for forming the intermediate layer, formability, haze of the body portion of the preform and haze of the body portion of the bottle.

(Comparative Example 3)

A multilayered blow-molded bottle was formed and measured in the same manner as in Comparative Example 2 but throwing the pelletized oxygen-absorbing resin which used the first ethylene terephthalate type polyester resin (A1-2) into the hopper of the injection machine for forming the intermediate layer.
Table 1 shows the composition of the formed bottle, temperature for forming the intermediate layer, formability, haze of the body portion of the preform and haze of the body portion of the bottle.

(Comparative Example 4)

A multilayered blow-molded bottle was formed and measured in the same manner as in Comparative Example 2 but forming the intermediate layer at a temperature of 265°C.

Table 1 shows the composition of the formed bottle, temperature for forming the intermediate layer, formability, haze of the body portion of the preform and haze of the body portion of the bottle.

(Comparative Example 5)

A multilayered blow-molded bottle was formed and measured in the same manner as in Comparative Example 3 but forming the intermediate layer at a temperature of 265°C.

Table 1 shows the composition of the formed bottle, temperature for forming the intermediate layer, formability, haze of the body portion of the preform and haze of the body portion of the bottle.

[Table 1]

| | PET forming the inner and outer layers | Intermediate layer | | | Temperature for forming the intermediate layer (°C) | Formability | Haze of the body portion of the preform | Haze of the body portion of the bottle |
|---|---|---|---|---|---|---|---|---|
| | | Ratio (wt%) | PET | Amount of oxygen-absorbing component (wt%) | | | | |
| Ex. 1 | A1-1 | 10 | A2-1 | 10 | 260 | ○ | 2.5 | 0.8 |
| Ex. 2 | A1-1 | 10 | A2-2 | 10 | 240 | ○ | 2.5 | 0.6 |
| Ex. 3 | A1-1 | 10 | A2-3 | 10 | 240 | ○ | 2.4 | 0.7 |
| Comp. Ex. 1 | A1-1 | 0 | | | | ○ | 2.2 | 0.9 |
| Comp. Ex. 2 | A1-1 | 10 | A1-1 | 10 | 280 | × | 3.9 | 2.7 |
| Comp. Ex. 3 | A1-1 | 10 | A1-2 | 10 | 280 | × | 4.5 | 6.1 |
| Comp. Ex. 4 | A1-1 | 10 | A1-1 | 10 | 265 | ○ | 16.7 | 15.5 |
| Comp. Ex. 5 | A1-1 | 10 | A1-2 | 10 | 265 | ○ | 14.1 | 14.2 |

**Claims**

1. A formed body having a multilayered structure comprising inner and outer layers of a first ethylene terephthalate type polyester resin, and an oxygen-absorbing intermediate layer containing a non-polymer type organic oxygen absorber;
   wherein, said oxygen-absorbing intermediate layer, further, contains a second ethylene terephthalate type polyester resin that has relatively more copolymerizable units than the first ethylene terephthalate type polyester resin, said non-polymer type organic oxygen absorber being contained therein in an amount of not less than 5 parts by mass per 100 parts by mass of the second ethylene terephthalate type polyester resin.

2. The formed body having a multilayered structure according to claim 1, wherein said second ethylene terephthalate type polyester resin contains a copolymerizable component in an amount of 5 to 40 mol%.

3. The formed body having a multilayered structure according to claim 1, wherein the first ethylene terephthalate type polyester resin contains the copolymerizable component in an amount suppressed to be not more than 5 mol%.

4. The formed body having a multilayered structure according to claim 1, wherein said non-polymer type organic oxygen absorber assumes the form of a liquid at not lower than 50°C.

5. The formed body having a multilayered structure according to claim 1, wherein said non-polymer type organic oxygen absorber is an imide compound having an unsaturated alicyclic ring in the molecules thereof.

6. The formed body having a multilayered structure according to claim 5, wherein said non-polymer type organic oxygen absorber is an imide compound derived from an acid anhydride represented by the following formula (1):

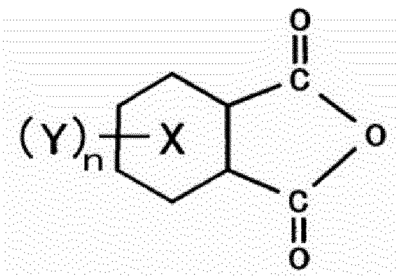

(1)

wherein, the ring X is an alicyclic ring having an unsaturated bond, n is a number of substituents Y bonded to the ring X and is an integer of 0 or 1, and Y is an alkyl group.

7. The formed body having a multilayered structure according to claim 1, wherein the formed body is used as a preform for forming a container.

8. The formed body having a multilayered structure according to claim 1, wherein the formed body is used as a container.

Fig. 1

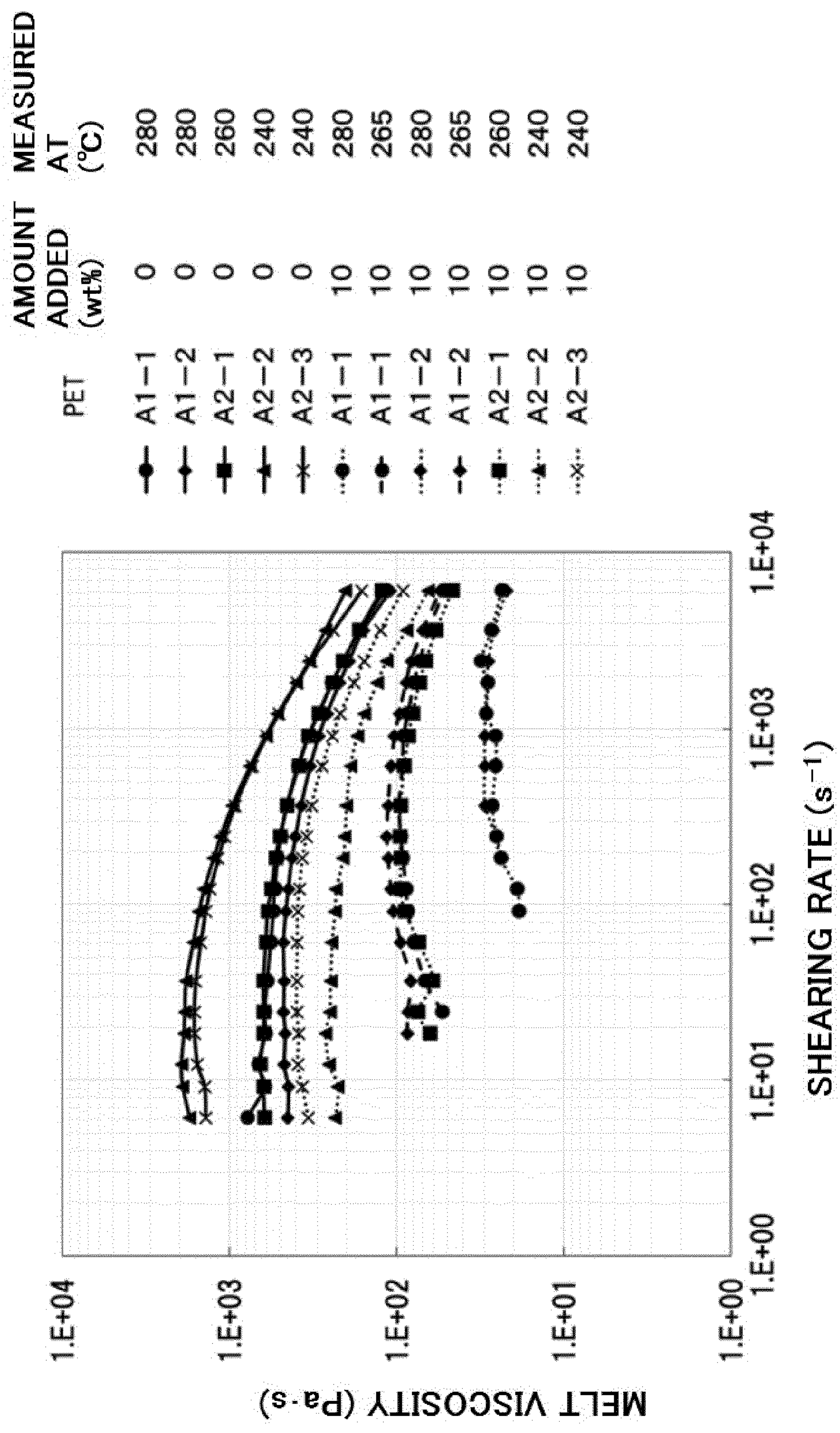
PET
AMOUNT ADDED (wt%)
MEASURED AT (℃)
A1−1 0 280
A1−2 0 280
A2−1 0 260
A2−2 0 240
A2−3 0 240
A1−1 10 280
A1−1 10 265
A1−2 10 280
A1−2 10 265
A2−1 10 260
A2−2 10 240
A2−3 10 240
MELT VISCOSITY (Pa·s)
1.E+04
1.E+03
1.E+02
1.E+01
1.E+00
SHEARING RATE (s$^{-1}$)
1.E+00
1.E+01
1.E+02
1.E+03
1.E+04

**INTERNATIONAL SEARCH REPORT**

International application No.
PCT/JP2017/030116

A. CLASSIFICATION OF SUBJECT MATTER
*B32B27/36*(2006.01)i, *B29B11/06*(2006.01)i, *B29C49/22*(2006.01)i, *B32B27/00*(2006.01)i, *B65D65/40*(2006.01)n

According to International Patent Classification (IPC) or to both national classification and IPC

B. FIELDS SEARCHED

Minimum documentation searched (classification system followed by classification symbols)
B32B27/36, B29B11/06, B29C49/22, B32B27/00, B65D65/40

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2013/099921 A1 (Toyo Seikan Group Holdings, Ltd.),<br>04 July 2013 (04.07.2013),<br>claims; paragraphs [0005] to [0008], [0064] to [0065]; examples (particularly, paragraph [0069]; table 1)<br>& US 2014/0335297 A1<br>claims; paragraphs [0006] to [0009], [0130], [0131], [0138]; examples (paragraph [0168]; table 1)<br>& EP 2799497 A1 & CN 104039892 A<br>& KR 10-2014-0098219 A & KR 10-2015-0103302 A | 1,3-8<br>1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 October 2017 (12.10.17) | 24 October 2017 (24.10.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No. PCT/JP2017/030116

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2015-157470 A (Toyo Seikan Group Holdings, Ltd.), 03 September 2015 (03.09.2015), claims 1, 5; paragraphs [0014], [0017], [0022]; examples (particularly, paragraphs [0030], [0052]) & US 2016/0325871 A1 claims 1, 5; paragraphs [0039], [0046] to [0047], [0062] to [0067]; examples (paragraphs [0093] to [0107], [0158] to [0161]) & WO 2015/111690 A1 & EP 3098056 A1 & CN 105934325 A & KR 10-2016-0103088 A | 1-8 |
| Y | JP 59-089149 A (Mitsui Petrochemical Industries, Ltd.), 23 May 1984 (23.05.1984), claims; page 2, upper right column, line 15 to page 3, upper left column, line 2; page 3, upper left column, line 17 to upper right column, line 5; page 3, upper right column, line 14 to lower left column, line 2; examples 2 to 4 & US 4618386 A column 2, line 22 to column 3, line 15; column 4, lines 24 to 35; examples & US 4940616 A & EP 109305 A2 | 1-8 |
| A | JP 2014-172219 A (Mitsubishi Gas Chemical Co., Inc.), 22 September 2014 (22.09.2014), claims; examples & US 2015/0368023 A1 claims; examples & WO 2014/136918 A1 & EP 2965907 A1 & CN 105026151 A & KR 10-2015-0128809 A | 1-8 |
| A | JP 2001-520135 A (Plastics Fabrication Technologies, LLC), 30 October 2001 (30.10.2001), claims; fig. 17 & WO 99/20462 A2 claims; fig. 17 | 1-8 |
| A | JP 59-067049 A (The Goodyear Tire & Rubber Co.), 16 April 1984 (16.04.1984), claims & US 1182586 A claims & EP 105825 A2 | 1-8 |

Form PCT/ISA/210 (continuation of second sheet) (January 2015)

**INTERNATIONAL SEARCH REPORT**

International application No.
PCT/JP2017/030116

C (Continuation). DOCUMENTS CONSIDERED TO BE RELEVANT

| Category* | Citation of document, with indication, where appropriate, of the relevant passages | Relevant to claim No. |
|---|---|---|
| A | US 2003/0235667 A1 (RICHARD C. Darr, WILLIAM A. Slat), 25 December 2003 (25.12.2003), claims & WO 2004/000659 A2 & EP 1515895 A2 | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004161796 A
- JP 2010523799 T
- WO 2012102086 A
- WO 2013099921 A
- JP 2015174895 A
- JP 2013531084 A
- JP 8283422 A
- JP 2004002566 A